# EUROPEAN PATENT SPECIFICATION

(11) **EP 1 067 267 B1**
(45) Date of publication and mention of the grant of the patent: **24.03.2004**
(21) Application number: 00114306.4
(22) Date of filing: 04.07.2000
(51) Int. Cl.: E05D 11/10

(54) **Integrated door check hinge for automobiles**
Türscharnier mit integriertem Türfeststeller für Kraftwagen
Charnière de porte avec un arrêt de porte integré pour véhicules

(30) Priority: 07.07.1999 CA 2277114
(43) Date of publication of application: 10.01.2001
(73) Proprietor: MULTIMATIC INC., Markham, Ontario L3R 5E5 (CA)
(72) Inventor: Jesse, Gerhart, 30900 Wedemark (DE)
(74) Representative: Lucking, David John

(56) References cited:
- DE-A- 19 755 547
- DE-U- 8 621 214
- DE-U- 29 614 386
- FR-A- 2 670 530
- NL-A- 8 701 355
- US-A- 2 890 477

## Description

### FIELD OF THE INVENTION

This invention relates to automotive door check devices, and in particular to a compact mechanical device capable of holding an automotive door in a number of predetermined open positions with a predetermined force.

### DESCRIPTION OF THE PRIOR ART

It has been found useful to check the movement of an automotive door in a number of predetermined open positions to assure convenient and safe ingress/egress of the occupants. The door is normally checked against movement in at least one open position with an effort or resistive force adequate to resist wind gusts and the effect of parking on a grade.

The most common form of automotive door check is a mechanical device that resists motion by releasably storing energy in response to forced motion of the system. These devices, located between the vehicle pillar and door, can be configured to be integral with the door hinge or separate as autonomous mechanical assemblies. Energy storage is generally achieved by using a form of spring with coil and torsion arrangements being the most popular configurations. As the door is opened or closed, the door check device is configured to release energy entering the check positions and to store it when moving out of the check positions. The most common method of storing energy in the spring system is by means of a cam arrangement that moves in conjunction with the door. This cam can work within the hinge to ultimately produce a torque around the pivot axis of the hinge, or can work linearly in a separate checking device which produces a force vector to resist door movement at selected open positions.

Because the door check device must be located between the vehicle pillar and door, it is forced to occupy a severely restricted package space; there is limited clearance between the vehicle pillar and the door. Additionally, the weight of the door check device must not be too great; a significant proportion of the door check system mass resides within the door profile; the door swings on a pivot and is highly sensitive to weight. The size and weight of this device are therefore critical design parameters. The main focus of a door check development is to attain the required check efforts in the smallest possible package at the lowest achievable weight. The type of spring and its related strain energy storage capability combined with the package efficiency of the actuation mechanism dictate the overall effectiveness of the door check system.

It has been proposed in DE 29614386-U1 to provide a door check device having four rollers which are urged into grooves by respective leaf springs to provide checks to the movement of an automotive door. Such arrangements cannot readily be packaged into the restricted space available whilst developing an adequate torque reaction to check door movement.

In NL-A-8701355 there is proposed a device having a resilient energy storage device disposed in a cylindrical cage of needle bearings. The resilient energy storage device is made of a naturally resilient material which is unlikely to develop and sustain an adequate torque reaction to check door movment where applied to a door check device.

### GENERAL DESCRIPTION OF THE INVENTION

The present invention is targeted at reducing the weight, cost, complexity and packaging space of an automotive door system checking device. It specifically packages the check effort generating component inside the hinge assembly, coaxial with the hinge pivot axis using a highly space-efficient energy storage means. The hinge assembly normally comprises a hinge door component, a hinge body component, and a pivot pin linking these components and allowing them to rotate relative to each other about the pivot pin axis.

According to the invention a door checking apparatus for an automobile comprises:
(a) an array of needle bearings held in contact either with a shaft containing axially oriented grooves or the inside cylindrical bore of a housing member containing axially oriented grooves, via a resilient energy storage device;
(b) a cylindrical cage coaxially disposed around the grooved shaft or within the cylindrical bore of the housing member, the cage containing an axially oriented array of slots arranged to retain the needle bearings;
(c) the reslient energy storage device being coaxially disposed with respect to the cylindrical cage so as both to retain and bias the needle bearings into the grooves;
(d) means to impart rotary motion to the cylindrical cage causing the needle bearings to move around the grooved shaft or relative to the inner bore, creating a torque reaction in response to radial expansion or compression, of the resilient energy storage device as the needle bearings move into and out of the grooves.
(e) means to transmit the imparted torque out of the grooved shaft or cylindrical cage and into an appropriate structure;
   and characterised in that the resilient energy strorage device is a coil spring either being coaxially disposed either over the needle bearings or within the cylindrical cage and needle bearings.

Thus when the door checking apparatus is mounted between an automobile door and an automobile body, the rotary movement of the door is checked with predetermined force at positions determined by the relationship between the needle bearings and the grooves.

Where the resilient energy storage device is coaxially disposed over the needle bearings, the bearing surface may comprise the outer surface of a cylindrical shaft or, alternatively, where the resilient energy storage device is received within the cylindrical cage, the inside cylindrical bore of a housing member.

In one preferred embodiment the resilient energy storage device is a coil spring which is wound so as to have no axial spaces between the coils.

The profiles of the grooves in the outer surface of the cylindrical shaft, or alternatively, inside the cylindrical bore, may be shaped so that the summation of the torque reactions of the needle bearings results in the total required door system check effort.

The grooves may be arranged circumferentially on the shaft so as to correspond with the door system's check position angles, or the grooves are arranged circumferentially inside the cylindrical bore of the housing member so as to correspond with the door system's check position angles.

A grooved shaft and cylindrical cage may be coaxially disposed with the pivot pin of an automobile door hinge. Rotary motion may be imparted by the hinge door component, and the developed torque is transmitted out of the grooved shaft by the hinge body component.

Alternatively the housing member and cylindrical cage are coaxially disposed with the pivot axis of an automobile door hinge and rotary motion is imparted by the hinge door component via the housing member, and the developed torque is transmitted out of the cylindrical cage by the hinge body component.

### BRIEF DESCRIPTION OF THE DRAWINGS

Figure 1 is an elevated cross-sectional view through an integrated door check hinge.
Figure 2 is a plan, cross-sectional view through a portion of the integrated door check hinge.
Figure 3 is a perspective view of the integrated door check hinge.
Figure 4 is an elevated cross-sectional view through an alternative preferred embodiment of the integrated door check hinge.
Figure 5 is a plan, cross-sectional view through a portion of the alternative preferred embodiment of the integrated door check hinge.
Figure 6 is a perspective view of the alternative preferred embodiment of the integrated door check hinge.

### DETAILED DESCRIPTION OF THE INVENTION

Referring now to the drawings, preferred embodiments of the invention will be described in detail. It will be understood that the invention is not limited to these preferred embodiments, but that they are illustrative of the invention.

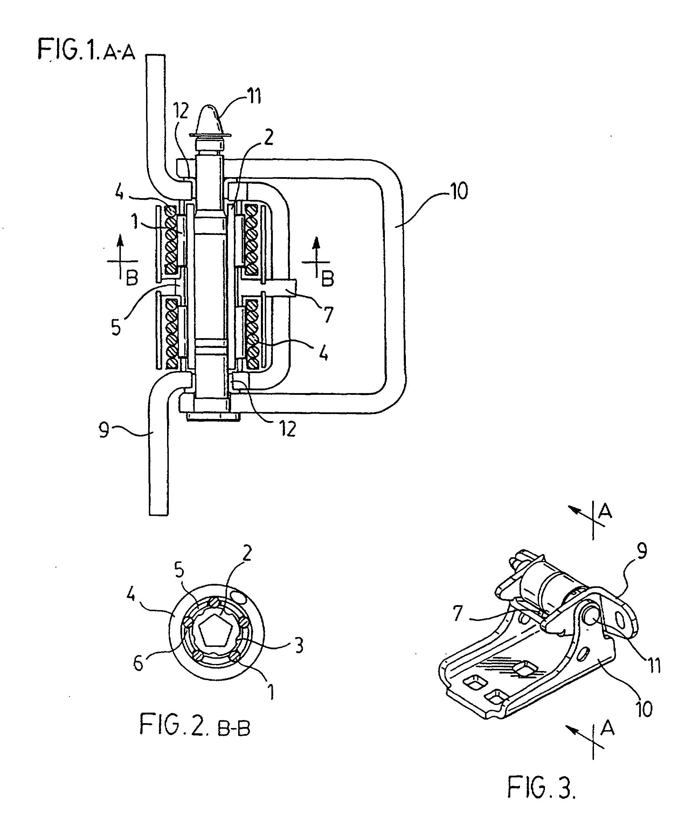

Referring to Figures 1, 2 and 3, a hollow shaft (2) is coaxially disposed around a door hinge axis pin (11) so as to transmit torque between the shaft and the pin using splines, hexagonal section or similar means. The shaft (2) has an array of axially oriented grooves (3) disposed around its circumference at predetermined angular positions. A cylindrical cage (5) is coaxially disposed around the grooved shaft and contains an array of axially oriented slots (6) retaining a compliment of needle bearings (1). An energy storage device (4), in this case a coil spring, is coaxially disposed over the needle bearings so as to both retain and bias the needle bearings into the grooves (3) located on the outside surface of the shaft (2). The cage (5) includes a torque reaction arm (7) that is coupled to the hinge's door component (9).

The hinge pin is configured so as to transmit torque to the hinge's body component (10) via splines, hexagonal section or similar means. In sectional profile, the grooves (3) are shaped so that as the hinge door component (9) and body component (10) are rotated relative to each other and the needle bearings (1) are forced to climb out of the grooves and expand the energy storage device (4), the summation of the reaction forces creates a total torque magnitude and profile that corresponds to the checking effort requirements of the door system. Additionally, the predetermined angular positions of the grooves (3) correspond with the door system's required check positions. Two bushings (12) are disposed in the hinge door component (9) so as to facilitate ease of rotation of the hinge pin (11) and hinge body component (10) relative to the door component (9).

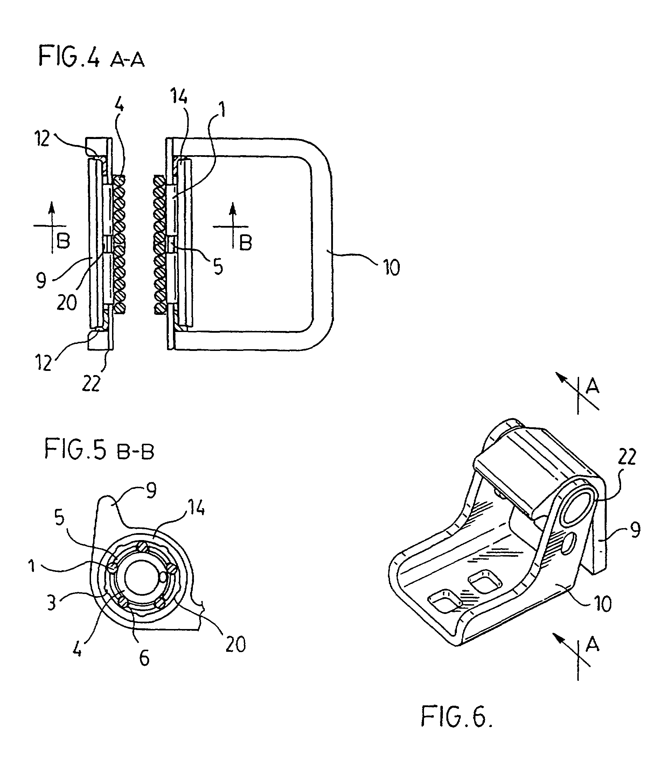

Referring to Figures 4, 5 and 6, an alternative arrangement of the device utilizes a housing member (14) with an internal cylindrical bore (20) that contains an array of axially oriented grooves (3) disposed around its circumference at predetermined angular positions. The housing member (14) is rigidly connected to the hinge's door component (9) via a bolted, riveted or welded joint or similar means. A cylindrical cage (5) is coaxially disposed within the cylindrical bore and contains an array of axially oriented slots (6) retaining a compliment of needle bearings (1). An energy storage device (4) is coaxially disposed within the cylindrical cage (5) and needle bearings (1) so as to both retain and bias the needle bearings into the grooves (3) located on the inside surface of the bore (20). The cage (5) includes a torque reaction device (22) that is coupled to the hinge's body component (10).

In sectional profile, the grooves (3) are shaped so that as the hinge door component (9) and body component (10) are rotated relative to each other and the needle bearings (1) are forced to climb out of the grooves and compress the energy storage device (4), the summation of the reaction forces creates a total torque magnitude and profile that corresponds to the checking effort requirements of the door system. Additionally, the predetermined angular positions of the grooves (3) correspond with the door system's required check positions. Two bushings (12) are disposed in the internal cylindrical bore (20) of the housing member (14) so as to facilitate ease of rotation of the cylindrical cage (5) and hinge body component (10) relative to the door component (9).

A preferred embodiment of the energy storage device (4) is a coil spring wound so as to have no axial space between the coils. A further improvement on the coil spring involves use of square section wire so as to provide either a continuous smooth internal or external bore to act upon the needle bearings (1).

## Claims

1. A door checking apparatus for an automobile comprising:
(a) an array of needle bearings (1) held in contact with a shaft (2) containing axially oriented grooves (3), via a resilient energy storage device (4);
(b) a cylindrical cage (5) coaxially disposed around the grooved shaft (2) and containing an axially oriented array of slots (6) arranged to retain the needle bearings (1);
(c) the resilient energy storage device (4) being coaxially disposed with respect to the needle bearings (1) so as both the retain and bias the needle bearings (1) into the grooves (3), and the device (4) being cylindrical and radially resilient;
(d) means to impart rotary motion to the cylindrical cage (5) causing the needle bearings (1) to move arond the grooved shaft (2) creating a torque reaction in response to radial expansion of the resilient energy storage device (4) as the needle bearings (1) move into and out of the shaft grooves (3).
(e) means (7) to transmit the imparted torque out of the grooved shaft (2) and into an appropriate structure;
**characterised in that** the resilient energy strorage device (4) is a coil spring which is coaxially disposed over the needle bearings (4).

2. The door checking apparatus of Claim 2, wherein the coil spring (4) is wound so as to have no axial spaces between the coils.

3. The door checking apparatus of Claims 1 or 2, wherein the profile of the grooves (3) in the shaft (2) is shaped so that the summation of the torque reactions of the needle bearings (1) results in the total required door system check effort.

4. The door checking apparatus of any one of the preceding calims wherein the grooves (3) are arranged circumferentially in the shaft (2) so as to correspond with check position angles of the door.

5. The door checking apparatus of Claims 1, 2, 3, or 4, wherein the grooved shaft (2) and cylindrical cage (5) are coaxially disposed with a pivot pin (11) of an automobile door hinge and rotary motion is imparted by the hinge door component (9) and the developed torque is transmitted out of the grooved shaft by the hinge body component (10).

6. A door checking apparatus for an automobile comprising:
(a) an array of needle bearings (1) held in contact with the inside cylindrical bore (20) of a housing member (14) containing axially oriented grooves (3), via a resilient energy storage device (4);
(b) a cylindrical cage (5) coaxially disposed within the cylindrical bore (20) of the housing member (14) and comprising an axially oriented array of slots (6) arranged to retain the needle bearings (1);
(c) the resilient energy storage device (4) being coaxially disposed within the cylindrical cage (5) and needle bearings (1) so as both to retain and bias the needle bearings (1) into the grooves (3).
(d) means to impart rotary motion to the cylindrical cage (5) causing relative motion between the needle bearings (1) and the grooved inner bore (20) creating a torque reaction in response to the radial compression of the resilient energy storage device (4) as the needle bearings (1) move into and out of the grooves (3);
(e) means (22) to transmit the imparted torque out of the cylindrical cage (5) and into an appropriate structure (10):
**characterised in that** the resilient energy storage device (4) is a coil spring coaxially disposed within the cylindrical cage (5) and needle bearings (1).

7. The door checking apparatus of Claim 6, wherein the coil spring (4) is wound so as to have no axial spaces between the coils.

8. The door checking apparatus of Claims 6 or 7, wherein the profile of the grooves (3) inside the cylindrical bore (20) is shaped so that the summation of the torque reactions of the needle bearings (1) results in the total required door system check effort.

9. The door checking apparatus of Claims 6, 7 or 8, wherein the grooves (3) are arranged circumferentially inside the cylindrical bore (20) of the housing member (14) so as to correspond with the door system's check position angles.

10. The door checking apparatus of Claims 6, 7, 8 or 9, wherein the housing member (14) and cylindrical cage (5) are coaxially disposed with the pivot axis of an automobile door hinge, and rotary motion is imparted by the hinge door component via the housing member (14) and the developed torque is transmitted out of the cylindrical cage (5) by the hinge body component (10).

11. The door checking apparatus of Claims 2 or 7, wherein the coil spring (4) comprises square section wire.

## Patentansprüche

1. Türhemmungsvorrichtung für ein Kraftfahrzeug, mit:
a) einem Feld von Nadellagern (1), die in Kontakt mit einer Welle (2) gehalten werden, die axial orientierte Nuten (3) aufweist, mittels einer eleastischen Energiespeichervorrichtung (4);
b) einem zylindrischen Käfig (5), der koaxial um die mit Nuten versehene Welle (2) herum angeordnet ist und ein axial orientiertes Feld von Schlitzen (6) aufweist, die so angeordnet sind, daß die Nadellager (1) festgehalten werden;
c) wobei die elastische Energiespeichervorrichtung (4) koaxial in bezug auf die Nadellager (1) angeordnet ist, so daß die Nadellager (1) sowohl in den Nuten (3) gehalten als auch in diese vorgespannt werden, wobei die Vorrichtung (4) zylindrisch und in radialer Richtung elastisch ist;
d) Mitteln, um dem zylindrischen Käfig (5) eine Drehbewegung zu erteilen, die die Nadellager (1) dazu veranlaßt, sich um die mit Nuten versehene Welle (2) zu bewegen, wobei eine Drehmomentreaktion ansprechend auf eine radiale Aufweitung der elastischen Energiespeichervorrichtung (4) erzeugt wird, wenn sich die Nadellager (1) in die Nuten (3) der Welle hinein und aus diesen heraus bewegen;
e) Mitteln (7), um das mitgeteilte Drehmoment aus der mit Nuten versehenen Welle (2) und in eine geeignete Struktur zu übertragen;
**dadurch gekennzeichnet, daß** die elastische Energiespeichervorrichtung (4) eine Schraubenfeder ist, die koaxial über den Nadellagern (4) angeordnet ist.

2. Türhemmungsvorrichtung nach Anspruch 2, **dadurch gekennzeichnet, daß** die Schraubenfeder (4) so gewickelt ist, daß keine axialen Zwischenräume zwischen den Windungen vorhanden sind.

3. Türhemmungsvorrichtung nach Anspruch 1 oder 2, **dadurch gekennzeichnet, daß** das Profil der Nuten (3) in der Welle (2) so geformt ist, daß die Summe der Drehmomentreaktionen der Nadellager (1) in der insgesamt erforderlichen Hemmungskraft des Türsystems resultiert.

4. Türhemmungsvorrichtung nach einem der vorangehenden Ansprüche, **dadurch gekennzeichnet, daß** die Nuten (3) in Umfangsrichtung in der Welle (2) angeordnet sind, so daß sie den Winkeln der Hemmungspositionen des Türsystems entsprechen.

5. Türhemmungsvorrichtung nach Anspruch 1, 2, 3 oder 4, **dadurch gekennzeichnet, daß** die mit Nuten versehene Welle (2) und der zylindrische Käfig (5) koaxial mit einem Schwenkzapfen (11) einer Türaufhängung eines Kraftfahrzeugs angeordnet sind, wobei eine Drehbewegung durch die türseitige Komponente (9) des Gelenks erteilt wird, und das erzeugte Drehmoment aus der mit Nuten versehenen Welle durch die karosserieseitige Komponente des Gelenks (10) übertragen wird.

6. Türhemmungsvorrichtung für ein Kraftfahrzeug, mit:
a) einem Feld von Nadellagern (1), die in Kontakt mit der inneren zylindrischen Bohrung (20) eines Gehäuseteils (14) gehalten werden, das axial orientierte Nuten (3) aufweist, über eine elastische Energiespeichervorrichtung (4);
b) einem zylindrischen Käfig (5), der koaxial innerhalb der zylindrischen Bohrung (20) des Gehäuseteils (14) angeordnet ist und ein axial orientiertes Feld von Schlitzen (6) aufweist, die so angeordnet sind, daß die Nadellager (1) festgehalten werden;
c) wobei die elastische Energiespeichervorrichtung (4) koaxial innerhalb des zylindrischen Käfigs (5) und der Nadellager (1) angeordnet ist, so daß die Nadellager (1) in den Nuten (3) festgehalten werden und in diese hinein vorgespannt werden;
d) Mitteln, um dem zylindrischen Käfig (5) eine Drehbewegung zu erteilen, wobei eine relative Bewegung zwischen den Nadellagern (1) und der mit Nuten versehenen inneren Bohrung (20) veranlaßt wird, die eine Drehmomentreaktion ansprechend auf die radiale Kompression der elastischen Energiespeichervorrichtung (4) erzeugt, wenn sich die Nadellager (1) in die Nuten (3) hinein und aus diesen heraus bewegen;
e) Mitteln (22), um das mitgeteilte Drehmoment aus dem zylindrischen Käfig (5) heraus und in eine geeignete Struktur (10) einzuleiten;
**dadurch gekennzeichnet, daß** die elastische Energiespeichervorrichtung (4) eine Schraubenfeder ist, die koaxial innerhalb des zylindrischen Käfigs (5) und der Nadellager (1) angeordnet ist.

7. Türhemmungsvorrichtung nach Anspruch 6, **dadurch gekennzeichnet, daß** die Schraubenfeder (4) so gewickelt ist, daß keine axialen Zwischenräume zwischen den Windungen vorhanden sind.

8. Türhemmungssystem nach Anspruch 6 oder 7, **dadurch gekennzeichnet, daß** das Profil der Nuten (3) innerhalb der zylindrischen Bohrung (20) so geformt ist, daß die Summe der Drehmomentreaktionen der Nadellager (1) in der gesamten erforderlichen Hemmungskraft für das Türsystem resultiert.

9. Türhemmungsvorrichtung nach Anspruch 6, 7 oder 8, **dadurch gekennzeichnet, daß** die Nuten (3) in Umfangsrichtung innerhalb der zylindrischen Bohrung (20) des Gehäuseteils (14) angeordnet sind, so daß sie den Winkeln der Hemmungspositionen des Türsystems entsprechen.

10. Türhemmungsvorrichtung nach Anspruch 6, 7, 8 oder 9, **dadurch gekennzeichnet, daß** das Gehäuseteil (14) und der zylindrische Käfig (5) koaxial mit dem Schwenkzapfen einer Türaufhängung eines Kraftfahrzeugs angeordnet sind, und daß eine Drehbewegung durch die türseitige Komponente des Gelenks über das Gehäuseteil (14) erteilt wird, und daß das erzeugte Drehmoment aus dem zylindrischen Käfig (5) durch die karosserieseitige Komponente des Gelenks (10) übertragen wird.

11. Türhemmungsvorrichtung nach Anspruch 2 oder 7, **dadurch gekennzeichnet, daß** die Schraubenfeder (4) aus Draht mit rechteckigem Querschnitt besteht.

## Revendications

1. Dispositif d'arrêt de porte pour une automobile comprenant :
(a) une rangée de roulements à aiguilles (1) maintenus en contact avec un arbre (2) comprenant des rainures orientées axialement (3), par l'intermédiaire d'un dispositif de stockage d'énergie élastique (4) ;
(b) une cage cylindrique (5) coaxialement disposée autour de l'arbre rainuré (2) et comprenant une rangée de fentes (6) orientées axialement, agencées pour retenir les roulements à aiguilles (1) ;
(c) le dispositif de stockage d'énergie élastique (4) étant disposé coaxialement par rapport aux roulements à aiguilles (1) de façon à la fois à retenir et à solliciter les roulements à aiguilles (1) dans les rainures (3), et le dispositif (4) étant cylindrique et radialement élastique ;
(d) des moyens pour imprimer un mouvement rotatif à la cage cylindrique (5) pour entraîner les roulements à aiguilles (1) à se déplacer autour de l'arbre rainuré (2) en créant un effet de couple en réponse à l'expansion radiale du dispositif de stockage d'énergie élastique (4), quand les roulements à aiguilles (1) se déplacent dans et hors des rainures (3) de l'arbre ;
(e) des moyens (7) pour transmettre le couple imprimé hors de l'arbre rainuré (2) et dans une structure appropriée ;
**caractérisé en ce que** le dispositif de stockage d'énergie élastique (4) est un ressort hélicoïdal qui est disposé coaxialement sur les roulements à aiguilles (4).

2. Dispositif d'arrêt de porte selon la revendication 2, dans lequel le ressort hélicoïdal (4) est enroulé de façon à avoir aucun espace axial entre les spires.

3. Dispositif d'arrêt de porte selon la revendication 1 ou 2, dans lequel le profil des rainures (3) dans l'arbre (2) est conformé de sorte que la somme des effets de couple des roulements à aiguilles (1) entraîne l'effort d'arrêt requis total du système de porte.

4. Dispositif d'arrêt de porte selon l'une quelconque des revendications précédentes, dans lequel les rainures (3) sont agencées périphériquement sur l'arbre (2) de façon à correspondre aux angles des positions d'arrêt de la porte.

5. Dispositif d'arrêt de porte selon la revendication 1, 2, 3 ou 4, dans lequel l'arbre rainuré (2) et la cage cylindrique (5) sont disposés coaxialement à l'axe de pivot (11) d'une charnière de porte d'automobile, et le mouvement rotatif est imprimé par le composant de porte (9) de charnière et le couple développé est transmis hors de l'arbre rainuré par le composant de carrosserie (10) de charnière.

6. Dispositif d'arrêt de porte pour une automobile comprenant :
(a) une rangée de roulements à aiguilles (1) maintenus en contact avec l'alésage cylindrique intérieur (20) d'un organe de logement (14) comprenant des rainures orientées axialement (3), via un dispositif de stockage d'énergie élastique (4) ;
(b) une cage cylindrique (5) coaxialement disposée dans l'alésage cylindrique (20) de l'organe de porte (14) et comprenant une rangée de fentes (6) orientées axialement, agencées pour retenir les roulements à aiguilles (1) ;
(c) le dispositif de stockage d'énergie élastique (4) étant disposé coaxialement dans la cage cylindrique (5) et les roulements à aiguilles (1) de façon à la fois à retenir et à solliciter les roulements à aiguilles (1) dans les rainures (3) ;
(d) des moyens pour imprimer un mouvement rotatif à la cage cylindrique (5) entraînant le mouvement relatif entre les roulements à aiguilles (1) et l'alésage interne rainuré (20), créant un effet de couple en réponse à la compression radiale du dispositif de stockage d'énergie élastique (4), quand les roulements à aiguilles (1) se déplacent dans et hors des rainures (3) ;
(e) des moyens (22) pour transmettre le couple imprimé hors de la cage cylindrique (5) et dans une structure appropriée (10) ;
**caractérisé en ce que** le dispositif de stockage d'énergie élastique (4) est un ressort hélicoïdal disposé coaxialement dans la cage cylindrique (5) et les roulements à aiguilles (1).

7. Dispositif d'arrêt de porte selon la revendication 6, dans lequel le ressort hélicoïdal (4) est enroulé de façon à avoir aucun espace axial entre les spires.

8. Dispositif d'arrêt de porte selon la revendication 7 ou 8, dans lequel le profil des rainures (3) à l'intérieur de l'alésage cylindrique (20) est conformé de sorte que la somme des effets de couple des roulements à aiguilles (1) entraîne l'effort d'arrêt requis total du système de porte.

9. Dispositif d'arrêt de porte selon la revendication 6, 7 ou 8, dans lequel les rainures (3) sont agencées périphériquement à l'intérieur de l'alésage cylindrique (20) de l'organe de logement (14) de façon à correspondre aux angles des positions d'arrêt du système de porte.

10. Dispositif d'arrêt de porte selon la revendication 6, 7, 8 ou 9, dans lequel l'organe de logement (14) et la cage cylindrique (5) sont disposés coaxialement à l'axe de pivot d'une charnière de porte d'automobile, et le mouvement rotatif est imprimé par le composant de porte de charnière via l'organe de logement, et le couple développé est transmis hors de la cage cylindrique par le composant de carrosserie de charnière (10).

11. Dispositif d'arrêt de porte selon la revendication 2 ou 7, dans lequel le ressort hélicoïdal (4) comprend un fil métallique de section carrée.
